# EUROPEAN PATENT SPECIFICATION

(11) **EP 3 995 919 B1**
(45) Date of publication and mention of the grant of the patent: **11.06.2025**
(21) Application number: 20205887.1
(22) Date of filing: 05.11.2020
(51) Int. Cl.: G05B 23/02

(54) **METHOD AND SYSTEM FOR DIAGNOSING A MACHINE**
VERFAHREN UND SYSTEM ZUR DIAGNOSE EINER MASCHINE
MÉTHODE ET SYSTÈME DE DIAGNOSTIC D'UNE MACHINE

(43) Date of publication of application: 11.05.2022
(73) Proprietor: Hitachi, Ltd., Tokyo 100-8280 (JP)
(72) Inventor: KATO, Tetsuji, London EC2Y 5AJ (GB); YAMASHITA, Tomoaki, London EC2Y 5AJ (GB); ELLIS, Robert, London EC2Y 5AJ (GB)
(74) Representative: MERH-IP Matias Erny Reichl Hoffmann Patentanwälte PartG mbB

(56) References cited:
- EP-A2- 2 392 983
- WO-A1-2013/111397
- JP-A- S5 713 516
- KR-B1- 102 136 141
- US-A1- 2015 356 521
- US-A1- 2019 080 524

## Description

The herein described subject matter relates to a method and a diagnostic system for determining the maintenance requirement of a machine or machine parts.

Mechanical failures of machine parts can cause serious damage, which endangers the operation safety and the uptime of an asset. Maintaining machines on a regular time base, to prevent unexpected failures, means that machine parts are exchanged which have not yet reached the end of their useful life. This leads to unnecessary downtimes and increasing costs. Thus, signs of machine failure must be detected during normal operation so that machine parts are only replaced when failure is expected. Furthermore, appropriate feedback methods are required for incorporation into maintenance plans. To solve this issue, a diagnostic device is needed that monitors the relevant parts of machines and diagnosis their need for maintenance with high accuracy.
Patent Literature 1: JP 6556398 B1
Patent Literature 2: KR 102 136 141 B1
Patent Literature 3: JP S57 13516 A
Patent Literature 4: EP 2 392 983 A2
Patent Literature 5: WO 2013/111397 A1
Patent Literature 6: US 2019/080524 A1
Patent Literature 7: US 2015/356521 A1

Patent Literature 1 describes a method of generating a threshold value used for diagnosing a failure in a motor-driven mechanical device equipped with a vibration sensor. In order to determine individual failure thresholds on the basis of the sensor signal, the mechanical device is successively equipped with various motors that have been processed in advance in order to simulate a specific failure.

However, the simulation of a failure through specific processing of machine parts does not exactly represent the deterioration of a machine part caused by wear. Thus, the subject matter described herein uses inspection results of previously inspected machine parts, in order to determine the maintenance threshold.

Patent Literature 2 relates to an emergency generator having a failure prevention function using an artificial intelligence algorithm, wherein the emergency generator comprises: an engine; a generator connected to the engine to generate electricity; a distribution board to supply electricity to a load side; a sensor unit; a memory; and a control unit. Patent Literature 3 discloses a process control inspection circuit for inspecting a process control signal for outputting a process control signal in accordance with a process signal to be inputted and detecting a change in the process signal to a predetermined value or less. Patent Literature 4 discloses a life management system for a gas turbine as performed by a method, system and computer program product. The life management system includes a first step that provides for determining the cumulative damage of one or more gas turbine components, a second step that provides for determining the unit risk and classification probability of a gas turbine unit, and a third step that provides for calculating at least one life parameter from the first step and second step determinations.
Patent Literature 5 shows a health management method for a plant or facility that determines maintenance scheduling based on a health condition of a plant or facility, the method comprising: acquiring sensor data from a plurality of sensors attached to the plant or the facility, grasping the health condition of said plant or equipment and estimating the operation continuable time of said plant or equipment so as to output information necessary for performing maintenance scheduling. Patent Literature 6 discloses a system including a component for installation on a vehicle comprising a central maintenance computer ("CMC"); a configuration/maintenance module ("CMM") associated with the component and including memory for storing component information, a sensor for detecting a condition and generating data indicative thereof; a microprocessor for processing the sensor data and updating the component information with the processing results; and a communications interface between the CMM and the CMC. Patent Literature 7 relates to a system for oilfield equipment asset utilization improvement which includes a number of units of oilfield equipment, a controller having an equipment confidence module that interprets a condition value corresponding to each of the units of oilfield equipment, a job requirement module that interprets a performance requirement for an oil field procedure, and an equipment planning module that selects a set of units from the number of units of oilfield equipment in response to the performance requirement for the oilfield procedure and the condition value corresponding to each of the units of oilfield equipment

An object of the herein described subject matter is to realise a method and a diagnostic system for detecting a need for maintenance of a machine part with high accuracy.

This problem is solved by the subject matter according to the independent claims. Further preferred developments are described by the dependent claims.

The herein described subject matter comprises a method for diagnosing maintenance requirement of a machine including a plurality of machine parts. The machine may be any kind of mechanical machine such as a machine tool in a plant, a drive unit for a train or a vehicle, or a power generator. The machine parts may be bearings, axles, shafts, housings and so on.

Measuring signals from a plurality of sensors attached to the plurality of machine parts may be received and a condition monitoring parameter for each machine part may be determined from the measuring signals. The sensors may be vibration sensors, strain gauges, temperature sensors, pressure sensors, oil condition sensors, and any kind of sensors that are able to detect a condition of a machine or a machine part. Determining a condition monitoring parameter for a machine part may include, for example, performing an FFT analysis on a measured vibration signal to determine the signal amplitude at a critical frequency as the condition monitoring parameter of the machine part. Further examples of condition monitoring parameters may be the content of water included in the machine oil or the temperature in a bearing.

Maintenance of a machine part may be requested if a condition monitoring parameter of a monitored machine part exceeds a predetermined maintenance threshold. The term "maintenance threshold" shall be understood as the upper limit value of a determined condition monitoring parameter above which the machine or parts thereof must be maintained, in order to prevent an imminent failure.

This maintenance threshold is usually a "best guess" based on general experiences. However, the herein described subject matter may determine the maintenance threshold based on inspection results of previously inspected machine parts. This means that a machine part showing a particular condition monitoring parameter may be removed from the machine for detailed external analysis, in order to determine the wear condition of said machine part as inspection result. The wear condition of the machine part may then be correlated to the value of its condition monitoring parameter determined before removing the part from the machine. For example, if it is established that the inspected machine part has reached the end of its useful life, the value of its condition monitoring parameter determined before removal can be used as maintenance threshold.

An inspection of a machine part may include, for example, visual inspection, bearing grease analysis, oil analysis, vibration test on a test bench, and any kind of test suitable to quantify the wear condition of the machine part.

Considering the inspection results of previously inspected machine parts allows for determining the maintenance threshold with high accuracy and prevents removing of machine parts that can still be used.

According to a further aspect of the method, an inspection of a machine part may be initiated if the condition monitoring parameter of said machine part exceeds the predetermined maintenance threshold. In other words, the part to be maintained according to the maintenance threshold may be inspected, in order to determinate whether it has actually reached the end of its useful life. If it is found out that the removed part has not reached the end of its useful life, the maintenance threshold can be increased. In case of a completely defective machine part, however, the maintenance threshold must be decreased.

According to the invention, an inspection of a machine part is initiated if the condition monitoring parameter of said machine part exceeds a predetermined inspection threshold, which is preferably lower than the predetermined maintenance threshold. In other words, an inspection can already be initiated if the gradient of the condition monitoring parameter increases significantly before the maintenance threshold is reached. For example, the inspection threshold may be determined based on a gradient of the previously recorded values of the condition monitoring parameter. This might be useful in cases in which a failure of a machine part affects the operation safety or causes long downtimes of the machine. Furthermore, an increased number of inspections allows for estimating the maintenance threshold more precisely.

According to the invention, a remaining useful life of an inspected machine part is estimated based on an inspection result of the inspected machine part. For example, when the current wear condition of an inspected machine part is determined, its remaining useful life can be estimated using (physical) wear models simulating the progress of wear based on the determined wear condition. This allows for estimating the maintenance threshold based on inspected machine parts which have not already reached the end of their useful life.

According to a further aspect of the method, the predetermined maintenance threshold is determined based on the estimated remaining useful life and the condition monitoring parameter of the inspected machine part. When the remaining useful life of a machine part is estimated, the value of the condition monitoring parameter can be estimated based on the preceding development of the condition monitoring parameter. For example, the gradient of the condition monitoring parameter between several previous measuring points can be used to predict the value of the condition monitoring parameter at the end of useful life, which can serve as maintenance threshold.

According to a further aspect of the method, an inspection result is correlated to the condition monitoring parameter of a machine part by using a common identification code. For this purpose, the common identification code may be stored in an inspection database and in a condition monitoring parameter database. During the continuously performed condition monitoring of a machine part, the determined values of the condition monitoring parameter may be regularly stored in the condition monitoring parameter database. For example, the condition monitoring parameter may be recorded ones per minute, ones per hour or ones per day depending on the machine part to monitor. These recorded values may be provided, for example, with a timestamp, a machine part number and the last maintenance date of the machine part as identification code and transmitted to the condition monitoring parameter database. In case of an inspection, which may be carried out at longer time intervals, the inspection result stored in the inspection database may also be provided with an identification code including the timestamp of the inspection, the machine part number and the last maintenance date. This allows for correctly assigning the inspection result to the corresponding value of the condition monitoring parameter.

According to a further aspect of the method, a maintenance order of the plurality of machine parts is determined based on a difference between the condition monitoring parameter of each machine part and the predetermined maintenance threshold. As described above, maintenance of a machine part is requested if its condition monitoring parameter exceeds the predetermined maintenance threshold. For creating a maintenance plan, the condition monitoring parameter of each monitored machine part may be analyzed continuously, to determine the next machine part to be maintained. In other words, the difference between the current condition monitoring parameter and the predetermined maintenance threshold of each machine part may be recorded continuously, in order to define the sequence in which the various machine parts must be maintained. This allows for procuring the required spare parts at the right time.

According to a further aspect of the method, the maintenance order of the plurality of machine parts, the condition monitoring parameters, and a request for maintenance of a machine part may be displayed to a maintainer on a human-machine interface. In this way, the maintainer has an overview of the relevant information at all times and can prepare efficiently for maintenance.

The herein described subject matter further includes a diagnosis system for diagnosing the maintenance requirement of a machine including a plurality of machine parts according to the subject-matter of claim 7.

The estimation unit may perform an estimation of the remaining useful life of an inspected machine part based on the inspection result using (physical) models.

In the condition monitoring parameter database, the recorded values of the condition monitoring parameters may be stored, wherein each of the stored values is provided with an identification code including the recording timestamp, the machine part number and the last maintenance date of the machine part. In the inspection database, the inspection results of the inspected machine parts may be stored, wherein each of the inspection results may also be provided with an identification code including the timestamp of the inspection, the machine part number and the last maintenance date. This allows for correctly assigning the inspection result to the corresponding value of the condition monitoring parameter by the correlation unit. In the threshold database the predetermined maintenance thresholds and the predetermined inspection thresholds are stored, in order to review the development of the thresholds over an increasing number of inspection results.

Additionally, the diagnosis system may include a human-machine interface to display information such as the maintenance order of the plurality of machine parts, the condition monitoring parameters, and a request for maintenance of a machine part to a maintainer. This enables the maintainer to have an overview of the relevant information at all times and to prepare efficiently for the next maintenance.

The herein described subject matter may further comprise a machine including a plurality of machine parts and the above described diagnostic system.

Additionally, the herein described subject matter comprises a computer program product storable in a memory comprising instructions which, when carried out by a computer, causes the computer to perform the above described method.

Summarizing the above, the herein described subject matter ensures that the maintenance threshold is determined with high accuracy and that the relevant information is made available to a maintainer. This enables efficient planning and implementation of maintenance work on a machine.

In the following, the subject matter will be further explained based on at least one preferential example with reference to the attached exemplary drawings, wherein:
- Fig. 1: depicts schematically an example of a diagnosis system for diagnosing maintenance requirement of a machine including a plurality of machine parts;
- Fig. 2: depicts a flow chart showing a first example for determining a maintenance threshold of a monitored machine part; and
- Fig. 3: depicts a flow chart showing a second example for determining a maintenance threshold of a monitored machine part.

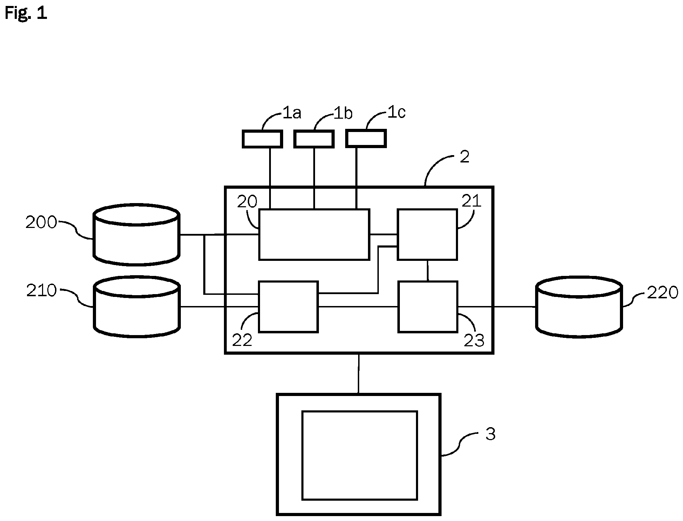

Fig. 1 depicts schematically an example of a diagnosis system for diagnosing maintenance requirement of a machine including a plurality of machine parts 1a, 1b, 1c. The depicted diagnosis system comprises a diagnostic device 2 including a condition monitoring unit 20, an estimation unit 21, a correlation unit 22 and a threshold setting unit 23. The condition monitoring unit 20 receives measuring signals from sensors attached to the machine parts 1a, 1b, 1c and determines condition monitoring parameters based on the received measuring signals. The determined condition monitoring parameters are stored in a condition monitoring parameter database 200, which is connected to the condition monitoring unit 20. The correlation unit 22 of the diagnostic device 2 assigns inspection results of inspected machine parts to the corresponding condition monitoring parameter. Therefore, the depicted correlation unit 22 is connected to the condition monitoring parameter database 200 and to an inspection database 210 in which the inspection results of inspected machine parts 1a, 1b, 1c are saved.

Since the saved inspection results and the saved condition monitoring parameters may be provided with a common identification code, the correlation unit can correlate the inspection results to the corresponding condition monitoring parameters. The estimation unit 21 of the diagnostic device 2 receives the condition monitoring parameters from the condition monitoring unit 20 and the correlated inspection results from the correlation unit 22 and estimates the remaining useful life of the inspected machine parts 1a, 1b, 1c and the corresponding maintenance threshold. The maintenance threshold estimated by the estimation unit 21 are transmitted to the threshold setting unit 23. The depicted threshold setting unit 23 is further connected to a threshold database 220 in which previously determined maintenance thresholds and previously determined inspection thresholds are saved.

Furthermore, the depicted diagnosis system includes a human-machine interface 3 that displays the relevant information generated by the diagnostic device 2 to a maintainer. The diagnostic system may be included in a single computing device or may be installed in different computing devices. For example, the databases 200 to 220 may be located in external servers, while the diagnostic device 2 and the human-machine interface 3 may be installed in a common computing device. It may also be possible that the diagnostic device 2 and the human-machine interface are located in different computing devices.

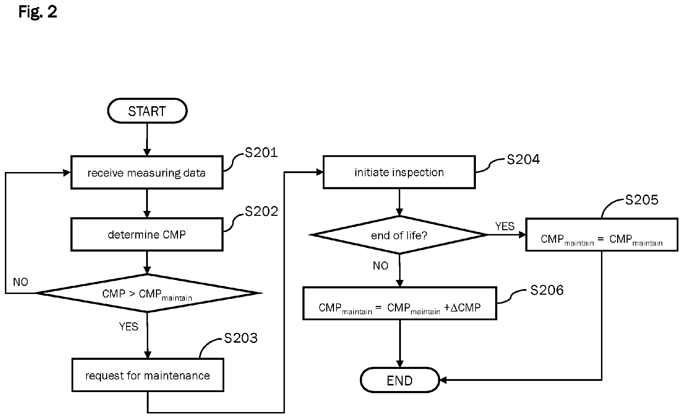

Fig. 2 depicts a flow chart showing a first example for determining a maintenance threshold of a monitored machine part. After starting the procedure, in step S201 measuring data is received from the monitored machine parts 1a, 1b, 1c out of which the respective condition monitoring parameters CMP are determined (S202). In case a condition monitoring parameter CMP exceeds the maintenance threshold CMPₘₐᵢₙₜₐᵢₙ, maintenance is requested in step S203 for the machine part 1a, 1b, 1c which has exceeded its maintenance threshold. Subsequently, in step S204, an inspection is initiated for the machine part 1a, 1b, 1c to be maintained. If the inspection result shows that the maintained machine part has reached the end of its useful life, the current maintenance threshold CMPₘₐᵢₙₜₐᵢₙ, is retained (S205). However, if the inspection result shows that the maintained machine part has not yet reached the end of its useful life, the maintenance threshold CMPₘₐᵢₙₜₐᵢₙ is increased by a value DCMP depending on the estimated remaining useful life of the machine part (S206). Additionally, the maintenance threshold CMPₘₐᵢₙₜₐᵢₙ can be decreased if the inspection result shows that the machine part is completely defective/destroyed. The procedure is finished after calculating an updated value of the maintenance threshold CMPₘₐᵢₙₜₐᵢₙ based on the previous inspection result.

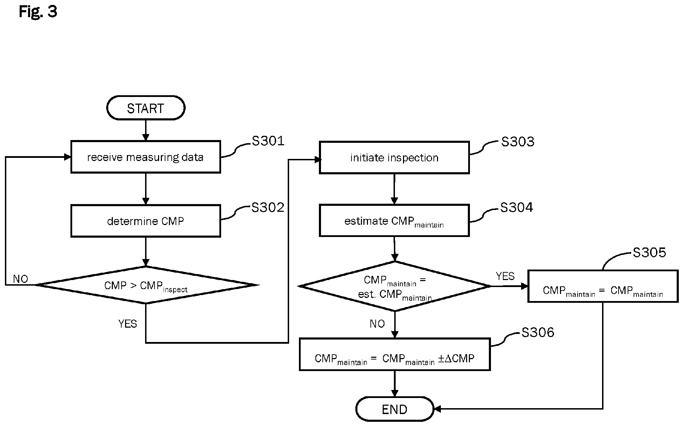

Fig. 3 depicts a flow chart showing a second example for determining a maintenance threshold of a monitored machine part. As in the first example, after starting the procedure, in step S301 measuring data is received from the monitored machine parts 1a, 1b, 1c out of which the respective condition monitoring parameters CMP are determined (S302). In case a condition monitoring parameter CMP of a monitored machine part exceeds a predetermined inspection threshold CMP_{inspect}, an inspection is initiated for the detected machine part 1a, 1b, 1c (S303). Based on the inspection result a remaining useful life of the machine part and the value of the condition monitoring parameter at the end of useful life is estimated in step S304. If the estimated value of the condition monitoring parameter at the end of the machine parts useful life, which can serve as an estimated maintenance threshold CMPₘₐᵢₙₜₐᵢₙ, is equal to the current maintenance threshold CMPₘₐᵢₙₜₐᵢₙ, the current threshold value is retained (S305). However, if the estimated maintenance threshold CMPₘₐᵢₙₜₐᵢₙ is different to the current predetermined maintenance threshold CMPₘₐᵢₙₜₐᵢₙ, the current value of the maintenance threshold CMPₘₐᵢₙₜₐᵢₙ is changed by a value DCMP, which is the difference between the estimated and the current maintenance threshold CMPₘₐᵢₙₜₐᵢₙ (S306). The procedure is finished after calculating an updated value of the maintenance threshold CMPₘₐᵢₙₜₐᵢₙ based on the estimated remaining useful life of the machine part and the value of the condition monitoring parameter at the estimated end of useful life.

Again summarizing, the herein described subject matter ensures that the maintenance threshold is determined with high accuracy and that the relevant information is made available to a maintainer. This enables efficient planning and implementation of maintenance work on a machine.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing.

Aspects/Examples of the present disclosure may be a software entirely (including firmware, resident software, micro-code, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described aspects and examples can be configured. Therefore, it is to be understood that, within the scope of the appended claims, the disclosure may be practiced other than as specifically described herein.

### Reference sign list

- 1a, 1b, 1c: machine parts
- 2: diagnostic device
- 3: human-machine interface
- 20: condition monitoring unit
- 21: estimation unit
- 22: correlation unit
- 23: threshold setting unit
- 200: condition monitoring parameter (CMP) database
- 220: inspection database
- 230: threshold database

## Claims

1. Method for diagnosing the maintenance requirement of a machine including a plurality of machine parts (1a, 1b, 1c), the method comprising the following steps:
receiving measuring signals from a plurality of sensors attached to the plurality of machine parts (1a, 1b, 1c);
determining a condition monitoring parameter for each machine part (1a, 1b, 1c) from the measuring signals;
correlating inspection results of previously inspected machine parts (1a, 1b, 1c) to corresponding condition monitoring parameters;
estimating from the determined condition monitoring parameters and the correlated inspection results a remaining useful life of the inspected machine parts and a corresponding maintenance threshold;
requesting for maintenance of a machine part (1a, 1b, 1c) if a condition monitoring parameter of said machine part (1a, 1b, 1c) exceeds the corresponding maintenance threshold.

2. Method according to claim 1, wherein an inspection of a machine part (1a, 1b, 1c) is initiated if the condition monitoring parameter of said machine part exceeds the corresponding maintenance threshold.

3. Method according to claim 1, wherein an inspection of a machine part (1a, 1b, 1c) is initiated if the condition monitoring parameter of said machine part (1a, 1b, 1c) exceeds a predetermined inspection threshold, which is lower than the corresponding maintenance threshold.

4. Method according to one of the preceding claims, wherein an inspection result is correlated to the condition monitoring parameter of a machine part (1a, 1b, 1c) by using a common identification code, and wherein the common identification code is stored in an inspection database (210) and in a condition monitoring parameter database (200).

5. Method according to one of the preceding claims, wherein a maintenance order of the plurality of machine parts (1a, 1b, 1c) is determined based on a difference between the condition monitoring parameter of each machine part (1a, 1b, 1c) and the corresponding maintenance threshold.

6. Method according to claim 5, wherein the maintenance order of the plurality of machine parts (1a, 1b, 1c), the condition monitoring parameter of each machine part (1a, 1b, 1c), and a request for maintenance of a machine part (1a, 1b, 1c) are displayed to a maintainer on a human-machine interface (3).

7. Diagnosis system for diagnosing the maintenance requirement of a machine including a plurality of machine parts (1a, 1b, 1c), the diagnosis system comprising
- a diagnostic device (2) including
a condition monitoring unit (20) configured to receive measuring signals from a plurality of sensors attached to the plurality of machine parts (1a, 1b, 1c), determine a condition monitoring parameter for each machine part (1a, 1b, 1c) from the measuring signals and request for maintenance if a condition monitoring parameter of a machine part exceeds a predetermined maintenance threshold,
a correlation unit configured to correlate inspection results of previously inspected machine parts to corresponding condition monitoring parameters;
an estimation unit (21) configured to estimate from the determined condition monitoring parameters and the correlated inspection results a remaining useful life of the inspected machine parts (1a, 1b, 1c) and a corresponding maintenance threshold, and
a threshold setting unit (23) configured to receive the corresponding maintenance threshold of each machine part determined by the estimation unit (21);
the diagnostic system further comprising
- a condition monitoring parameter database (200) configured to store condition monitoring parameters of the plurality of machine parts (1a, 1b, 1c);
- an inspection database (210) configured to store previous inspection results of the plurality of machine parts (1a, 1b, 1c);
- a threshold database (220) configured to store previously determined maintenance thresholds and previously determined inspection thresholds, and
- a human-machine interface (3) configured to display information generated by the diagnostic device (2) to a maintainer, wherein
the diagnostic device (2) is configured to transmit and receive data to/from the condition monitoring parameter database (200), the inspection database (210) and the threshold database (220), transmit data to the human-machine interface (3) and perform the method according to at least one of the method claims 1to 6.

8. Machine including a plurality of machine parts (1a, 1b, 1c) and the diagnostic system according to claim 7

9. Computer program product storable in a memory comprising instructions which, when carried out by the diagnostic device (2) according to claim 7, cause the diagnostic device (2) to perform the method according to at least one of the method claims 1 to 6.

## Patentansprüche

1. Verfahren zum Diagnostizieren der Wartungserfordernis einer Maschine, die mehrere Maschinenkomponenten (1a, 1b, 1c) enthält, wobei das Verfahren die folgenden Schritte umfasst:
Empfangen von Messsignalen von mehreren Sensoren, die an den mehreren Maschinenkomponenten (1a, 1b, 1c) angebracht sind;
Bestimmen eines Zustandsüberwachungsparameters für jede Maschinenkomponente (1a, 1b, 1c) aus den Messsignalen;
Korrelieren von Prüfergebnissen vorher geprüfter Maschinenkomponenten (1a, 1b, 1c) mit entsprechenden Zustandsüberwachungsparametern;
Schätzen einer verbleibenden Nutzungsdauer der geprüften Maschinenkomponenten und eines entsprechenden Wartungsschwellenwertes aus den bestimmten Zustandsüberwachungsparametern und den korrelierten Prüfergebnissen;
Anfordern einer Wartung einer Maschinenkomponente (1a, 1b, 1c), wenn ein Zustandsüberwachungsparameter der Maschinenkomponente (1a, 1b, 1c) den entsprechenden Wartungsschwellenwert überschreitet.

2. Verfahren nach Anspruch 1, wobei eine Prüfung einer Maschinenkomponente (1a, 1b, 1c) ausgelöst wird, wenn der Zustandsüberwachungsparameter der Maschinenkomponente den entsprechenden Wartungsschwellenwert überschreitet.

3. Verfahren nach Anspruch 1, wobei eine Prüfung einer Maschinenkomponente (1a, 1b, 1c) ausgelöst wird, wenn der Zustandsüberwachungsparameter der Maschinenkomponente (1a, 1b, 1c) einen vorgegebenen Prüfschwellenwert überschreitet, der niedriger als der entsprechende Wartungsschwellenwert ist.

4. Verfahren nach einem der vorhergehenden Ansprüche, wobei ein Prüfergebnis unter Verwendung eines allgemeinen Identifikationscodes mit dem Zustandsüberwachungsparameter einer Maschinenkomponente (1a, 1b, 1c) korreliert wird und wobei der allgemeine Identifikationscode in einer Prüfdatenbank (210) und in einer Zustandsüberwachungsparameter-Datenbank (200) gespeichert wird.

5. Verfahren nach einem der vorhergehenden Ansprüche, wobei eine Wartungsreihenfolge der mehreren Maschinenkomponenten (1a, 1b, 1c) auf der Grundlage einer Differenz zwischen dem Zustandsüberwachungsparameter jeder Maschinenkomponente (1a, 1b, 1c) und dem entsprechenden Wartungsschwellenwert bestimmt wird.

6. Verfahren nach Anspruch 5, wobei die Wartungsreihenfolge der mehreren Maschinenkomponenten (1a, 1b, 1c), der Zustandsüberwachungsparameter jeder Maschinenkomponente (1a, 1b, 1c) und eine Anforderung für eine Wartung einer Maschinenkomponente (1a, 1b, 1c) einem Wartungspersonal auf einer Mensch-Maschine-Schnittstelle (3) angezeigt werden.

7. Diagnosesystem zum Diagnostizieren der Wartungserfordernis einer Maschine, die mehrere Maschinenkomponenten (1a, 1b, 1c) enthält, wobei das Diagnosesystem Folgendes umfasst:
- eine Diagnosevorrichtung (2), die Folgendes enthält:
eine Zustandsüberwachungseinheit (20), die konfiguriert ist, Messsignale von mehreren Sensoren zu empfangen, die an den mehreren Maschinenkomponenten (1a, 1b, 1c) angebracht sind, aus den Messsignalen einen Zustandsüberwachungsparameter für jede Maschinenkomponente (1a, 1b, 1c) zu bestimmen und eine Wartung anzufordern, wenn ein Zustandsüberwachungsparameter einer Maschinenkomponente einen vorgegebenen Wartungsschwellenwert überschreitet,
eine Korrelationseinheit, die konfiguriert ist, Prüfergebnisse vorher geprüfter Maschinenkomponenten mit entsprechenden Zustandsüberwachungsparametern zu korrelieren,
eine Schätzeinheit (21), die konfiguriert ist, aus den bestimmten Zustandsüberwachungsparametern und den korrelierten Prüfergebnissen eine verbleibende Nutzungsdauer der geprüften Maschinenkomponenten (1a, 1b, 1c) und einen entsprechenden Wartungsschwellenwert zu schätzen, und
eine Schwellenwert-Einstelleinheit (23), die konfiguriert ist, den entsprechenden Wartungsschwellenwert von jeder Maschinenkomponente, der durch die Schätzeinheit (21) bestimmt wird, zu empfangen;
wobei das Diagnosesystem ferner Folgendes umfasst:
- eine Zustandsüberwachungsparameter-Datenbank (200), die konfiguriert ist, Zustandsüberwachungsparameter der mehreren Maschinenkomponenten (1a, 1b, 1c) zu speichern;
- eine Prüfdatenbank (210), die konfiguriert ist, frühere Prüfergebnisse der mehreren Maschinenkomponenten (1a, 1b, 1c) zu speichern;
- eine Schwellenwertdatenbank (220), die konfiguriert ist, vorher bestimmte Wartungsschwellenwerte und vorher bestimmte Prüfschwellenwerte zu speichern; und
- eine Mensch-Maschine-Schnittstelle (3), die konfiguriert ist, einem Wartungspersonal Informationen anzuzeigen, die durch die Diagnosevorrichtung (2) erzeugt werden, wobei
die Diagnosevorrichtung (2) konfiguriert ist, Daten an die/von der Zustandsüberwachungsparameter-Datenbank (200), an die/von der Prüfdatenbank (210) und an die/von der Schwellenwertdatenbank (220) zu senden und zu empfangen, Daten an die Mensch-Maschine-Schnittstelle (3) zu übertragen und das Verfahren nach mindestens einem der Verfahrensansprüche 1 bis 6 durchzuführen.

8. Maschine, die mehrere Maschinenkomponenten (1a, 1b, 1c) und das Diagnosesystem nach Anspruch 7 enthält.

9. Computerprogrammprodukt, das in einem Speicher speicherbar ist, das Anweisungen umfasst, die dann, wenn sie durch die Diagnosevorrichtung (2) nach Anspruch 7 ausgeführt werden, bewirken, dass die Diagnosevorrichtung (2) das Verfahren nach mindestens einem der Verfahrensansprüche 1 bis 6 durchführt.

## Revendications

1. Procédé de diagnostic d'exigence de maintenance d'une machine incluant une pluralité de pièces de machines (1a, 1b, 1c), le procédé comprenant les étapes suivantes :
recevoir des signaux de mesurage depuis une pluralité de capteurs fixés à la pluralité de pièces de machine (1a, 1b, 1c) ;
déterminer un paramètre de surveillance de condition pour chaque pièce de machine (1a, 1b, 1c) à partir des signaux de mesurage ;
corréler des résultats d'inspection de pièces de machine (1a, 1b, 1c) précédemment inspectées avec des paramètres de surveillance de condition correspondants ;
estimer, à partir des paramètres de surveillance de condition prédéterminés et des résultats d'inspection corrélés, une durée de vie utile résiduelle des pièces de machine et un seuil de maintenance correspondant ;
demander une maintenance d'une pièce de machine (1a, 1b, 1c) si un paramètre de surveillance de condition de ladite pièce de machine (1a, 1b, 1c), dépasse le seuil de maintenance correspondant.

2. Procédé selon la revendication 1, dans lequel une inspection de la pièce de machine (1a, 1b, 1c) est initiée si le paramètre de surveillance de condition de ladite pièce de machine dépasse le seuil de maintenance correspondant.

3. Procédé selon la revendication 1, dans lequel une inspection d'une pièce de machine (1a, 1b, 1c) est initiée si le paramètre de surveillance de condition de ladite pièce de machine (1a, 1b, 1c) dépasse un seuil d'inspection prédéterminé, qui est inférieur au seuil de maintenance correspondant.

4. Procédé selon l'une des revendications précédentes, dans lequel un résultat d'inspection est corrélé avec le paramètre de surveillance de condition d'une pièce de machine (1a, 1b, 1c) en utilisant un code d'identification commun, et dans lequel le code d'identification commun est stocké dans une base de données d'inspection (210) et dans une base de données de paramètres de surveillance de condition (200).

5. Procédé selon l'une des revendications précédentes, dans lequel un ordre de maintenance de la pluralité de pièces de machine (1a, 1b, 1c) est déterminé sur la base d'une différence entre le paramètre de surveillance de condition de chaque pièce de machine (1a, 1b, 1c) et le seuil de maintenance correspondant.

6. Procédé selon la revendication 5, dans lequel l'ordre de maintenance de la pluralité de pièces de machine (1a, 1b, 1c), le paramètre de surveillance de condition de chaque pièce de machine (1a, 1b, 1c), et une demande de maintenance d'une pièce de machine (1a, 1b, 1c), sont affichés à l'intention d'un maintenancier sur une interface homme-machine (3).

7. Système de diagnostic destiné à diagnostiquer l'exigence de maintenance d'une machine incluant une pluralité de pièces de machine (1a, 1b, 1c), le système de diagnostic comprenant
- un dispositif de diagnostic (2) incluant
une unité de surveillance de condition (20) configurée pour recevoir des signaux de mesurage provenant d'une pluralité de capteurs fixés à la pluralité de pièces de machine (1a, 1b, 1c), déterminer un paramètre de surveillance de condition pour chaque pièce de machine (1a, 1b, 1c) à partir des signaux de mesurage, et demander une maintenance si un paramètre de surveillance de condition d'une pièce de machine dépasse un seuil de maintenance prédéterminé,
une unité de corrélation configurée pour corréler des résultats d'inspection de pièces de machine précédemment inspectées avec des paramètres de surveillance de condition correspondants ;
une unité d'estimation (21) configurée pour estimer, à partir des paramètres de surveillance de condition déterminés et des résultats d'inspection corrélés, une durée de vie utile résiduelle des pièces de machine inspectées (1a, 1b, 1c) et un seuil de maintenance correspondant,
une unité d'établissement de seuil (23) configurée pour recevoir le seuil de maintenance correspondant de chaque pièce de machine déterminé par l'unité d'estimation (21) ;
le système de diagnostic comprenant en outre
- une base de données de paramètres de surveillance de condition (200) configurée pour stocker des paramètres de surveillance de condition de la pluralité de pièces de machine (1a, 1b, 1c) ;
- une base de données d'inspection (210) configurée pour stocker des résultats d'inspection précédents de la pluralité de pièces de machine (1a, 1b, 1c) ;
- une base de données de seuils (220) configurée pour stocker des seuils de maintenance précédemment déterminés et des seuils d'inspection précédemment déterminés, et
- une interface homme-machine (3) configurée pour afficher des informations générées par le dispositif de diagnostic (2) à l'attention d'un maintenancier, dans lequel
le dispositif de diagnostic (2) est configuré pour transmettre et recevoir des données vers/depuis la base de données de paramètres de surveillance de condition (200), la base de données d'inspection (210) et la base de données de seuil (220), transmettre des données à l'interface homme-machine (3), et effectuer le procédé selon l'une au moins des revendications 1 à 6.

8. Machine incluant une pluralité de pièces de machines (1a, 1b, 1c) et le système de diagnostic selon la revendication 7.

9. Produit de programme d'ordinateur pouvant être stocké dans une mémoire comprenant des instructions qui, quand elles sont exécutées par le dispositif de diagnostic (2) selon la revendication 7, amènent le dispositif de diagnostic (2) à effectuer le procédé selon l'une au moins des revendications 1 à 6.
